Europäisches Patentamt

European Patent Office

Office européen des brevets

(19)

(11) Numéro de publication : **0 087 377**
**B1**

(12) **FASCICULE DE BREVET EUROPÉEN**

(45) Date de publication du fascicule du brevet :
15.04.87

(51) Int. Cl.⁴ : **D 21 C   5/02**, D 21 C   9/10

(21) Numéro de dépôt : **83420024.8**

(22) Date de dépôt : **17.02.83**

(54) **Procédé de blanchiment sélectif de pâte à papier obtenue par récupération d'illustrés pour magazines et papiers obtenus à partir de cette pâte.**

(30) Priorité : **19.02.82 FR 8203085**

(43) Date de publication de la demande :
**31.08.83 Bulletin 83/35**

(45) Mention de la délivrance du brevet :
**15.04.87 Bulletin 87/16**

(84) Etats contractants désignés :
**AT BE CH DE FR GB IT LI LU NL SE**

(56) Documents cités :
**DE-A- 2 908 660**
**FR-A- 2 200 401**
**FR-A- 2 446 886**
**TAPPI, J. TECHN. ASS. PULP PAPER IND., vol. 62, no. 9, septembre 1979, pages 43-46, Atlanta, G.A., USA, M. STRADAL et al.: "Dry sorting. A new concept for upgrading mixed wastepaper"**
**TAPPI, J. TECHN. ASS. PULP PAPER IND., vol. 58, no. 4, avril 1975, pages 85-87, Atlanta, G.A., USA, P. LeBLANC et al.: "Fractionation of secondary fibers"**

(73) Titulaire : **PAPETERIES MATUSSIERE ET FOREST**
**26, Rue Colonel Dumont**
**F-38000 Grenoble (Isère) (FR)**

(72) Inventeur : **Floccia, Louis**
**1, Route de Colmar Wintzenheim**
**F-68000 Colmar (FR)**

(74) Mandataire : **Maureau, Pierre**
**Cabinet GERMAIN & MAUREAU Le Britannia - Tour C**
**20, Boulevard E. Déruelle**
**F-69003 Lyon (FR)**

EP 0 087 377 B1

Jouve, 18, rue St-Denis, 75001 Paris, France

## Description

La présente invention concerne un procédé de blanchiment sélectif de pâte à papier obtenue par récupération d'illustrés pour magazines ou de publications périodiques, ainsi que les papiers obtenus à partir de cette pâte.

Le marché français du papier est à l'heure actuelle largement tributaire de l'étranger pour la fourniture des pâtes chimiques provenant de bois de haute qualité et l'on s'efforce de plus en plus de s'affranchir au moins partiellement de cette dépendance et de tirer parti, dans toute la mesure du possible, des ressources nationales.

Les vieux papiers (vieux journaux, papiers Kraft, emballages...) constituent bien évidemment une source importante de fibres facilement disponible sur le marché national ; les processus de récupération se limitent en général à un traitement de désencrage ce qui, joint à la qualité médiocre de la pâte de départ qui est en général une pâte mécanique ou thermomécanique majoritaire à fibres courtes, conduit à l'obtention de pâte de qualité optique médiocre ; leur blancheur, qui se situe entre 58 et 62 G.E., est en effet nettement insuffisante pour l'obtention de papiers de qualité, pour lesquels on demande une blancheur avoisinant 70 à 72 G.E.

On a déjà proposé de soumettre les pâtes obtenues par mise en suspension de ce type de vieux papiers à une séparation mécanique en fractions se différenciant par la longueur des fibres qui les composent, puis à soumettre chacune de ces fractions à un blanchiment spécifique.

C'est ainsi que le procédé décrit dans la demande de brevet allemand DE-A-2 908 660 consiste à séparer la pâte obtenue par mise en suspension et éventuellement désencrage de vieux papiers en une fraction ne comportant pratiquement que des fibres longues et en une autre fraction ne comportant pratiquement que des fibres courtes. La fraction fibres longues — qui ne renferme plus de fibres courtes, du type pâte mécanique, à teneur élevée en lignine — peut alors être blanchie, sans risque de jaunissement, par du chlore ou des dérivés chlorés, la fraction fibres courtes étant soumise à une opération de lavage.

On conçoit facilement que ce procédé est délicat à mettre en œuvre et très coûteux : il impose en effet, pour l'obtention de pâtes de blancheur acceptable, une séparation pratiquement totale des fibres longues et des fibres courtes. Or cette séparation est pratiquement impossible à réaliser ; il subsistera toujours une certaine quantité de fibres courtes qui proscrivent tout blanchiment au chlore. La présence de ces fibres courtes, à teneur élevée en lignine, dans la fraction fibres longues destinée à être soumise à un blanchiment au chlore, conduirait en effet à l'obtention d'une pâte jaune pratiquement inutilisable.

Il existe par ailleurs une source très importante de matière première : celle qui proviendrait de la récupération des illustrés pour magazines ou des publications périodiques ; il s'agit en effet d'une matière bon marché, facile à récupérer et de bonne qualité, puisqu'en raison de sa teneur élevée en fibres longues elle présente, au départ, une blancheur déjà acceptable lui permettant une éventuelle utilisation comme pâte pour papier noble. Cette source n'est pourtant pratiquement pas exploitée jusqu'à maintenant par les récupérateurs en raison peut-être du pourcentage élevé de charges minérales nuisibles notamment au réemploi dans le domaine du carton.

La présente invention s'est donnée pour but de fournir un procédé de blanchiment sélectif d'une pâte obtenue par récupération de ces illustrés pour magazines et publications périodiques grâce auquel il est possible d'obtenir des pâtes directement utilisables pour la réalisation de papiers, et notamment de papiers de qualité satisfaisante et même de qualité supérieure, sans qu'il soit nécessaire d'effectuer, comme c'est le cas dans la demande de brevet allemand 2 908 660, une séparation totale des deux principaux constituants (fibres longues d'une part et fibres courtes d'autre part).

L'invention concerne donc un procédé de blanchiment sélectif de pâte à papier consistant à soumettre une pâte obtenue par mise en suspension de matières fibreuses et notamment de vieux papiers à une séparation mécanique en deux ou plusieurs fractions se différenciant par la longueur des fibres qui les composent, puis à soumettre chacune des fractions recueillies à un type de blanchiment spécifique du type de fibres de ladite fraction, caractérisé par les étapes suivantes :

a) on soumet une matière première constituée par des illustrés pour magazines et publications périodiques à un traitement de suspension, désencrage et élimination des contaminants gênants (bandes collantes, débris métalliques, plastiques, etc...) ;

b) la pâte obtenue par l'étape (a) est séparée par centrifugation en une première fraction correspondant à 30 à 70 % en poids de la totalité de la matière première introduite et constituée d'une majorité de fibres longues, la longueur des fibres de cette fraction se situant entre 1,5 et 4,5 mm ; et en une seconde fraction correspondant à 70 à 30 % en poids de la totalité de la matière première introduite et constituée d'une majorité de fibres courtes, la longueur des fibres de cette fraction se situant entre 0,3 et 2,5 mm ;

c) ladite première fraction est soumise à un blanchiment effectué en tour descendante (6) en milieu oxydant en présence d'un composé oxygéné ;

d) la seconde fraction est d'abord acidifiée pour amener son pH entre 6 et 7, et est ensuite soumise à un blanchiment effectué en tour ascendante en milieu réducteur en présence d'hydro- sulfite de sodium.

La demanderesse a en effet déterminé que le blanchiment de l'ensemble de la pâte obtenue après mise en suspension, désencrage et épuration des illustrés, que ce blanchiment soit effectué en milieu oxydant (eau oxygénée) ou en milieu réducteur, ne permettait d'arriver qu'à un gain de blancheur très faible : avec une blancheur de départ d'environ 60 G.E. on ne peut pas dépasser une blancheur de 62 à 65 G.E., blancheur tout à fait insuffisante pour l'obtention ultérieure d'un papier de qualité.

Si, par contre, on soumet la pâte obtenue après mise en suspension, désencrage et épuration à une séparation mécanique en au moins deux fractions se différenciant par la longueur des fibres qui les composent essentiellement (sans pour autant que cette séparation soit totale) il est possible d'arriver, après une opération de blanchiment appropriée, à d'excellents résultats.

Selon un mode de réalisation préféré de l'invention, le pourcentage en fibres longues se situe entre 40 et 60 % en poids de la totalité de la matière première introduite et le blanchiment en milieu oxydant est précédé d'une opération d'épaississage.

Le pourcentage en fibres courtes, éventuellement accompagnées de charges, que renferme la seconde fraction, se situe de préférence entre 60 et 40 % en poids de la totalité de la matière première introduite, et le blanchiment de ces fractions est effectué en tour ascendante, en milieu réducteur, en présence d'hydrosulfite ou de composés similaires.

Chacune des fractions peut, bien entendu, être recueillie et utilisée séparément, suivant le degré de blancheur obtenu.

Il est souvent avantageux de remélanger après blanchiment les fractions obtenues afin d'obtenir un mélange uniforme analogue à la composition de départ mais présentant une blancheur supérieure de 20 à 30 points par rapport à la blancheur d'origine des illustrés pour magazines et publications périodiques de départ.

Selon une variante du procédé, la totalité de la pâte de récupération ayant subi le processus de désencrage est blanchie dans une tour descendante en milieu oxydant, et les fibres ne sont séparées qu'après cette opération de blanchiment ; on peut alors utiliser la fraction contenant en prédominance des fibres longues, plus blanches, pour la réalisation de certains papiers de qualité, la fraction contenant en prédominance des fibres courtes, plus jaunes, étant réservée à la réalisation de papiers moins nobles.

Selon un autre mode de réalisation du procédé, on procède à un nouveau blanchiment de chaque fraction spécifique du type de fibres majoritaires de ladite fraction recueillie.

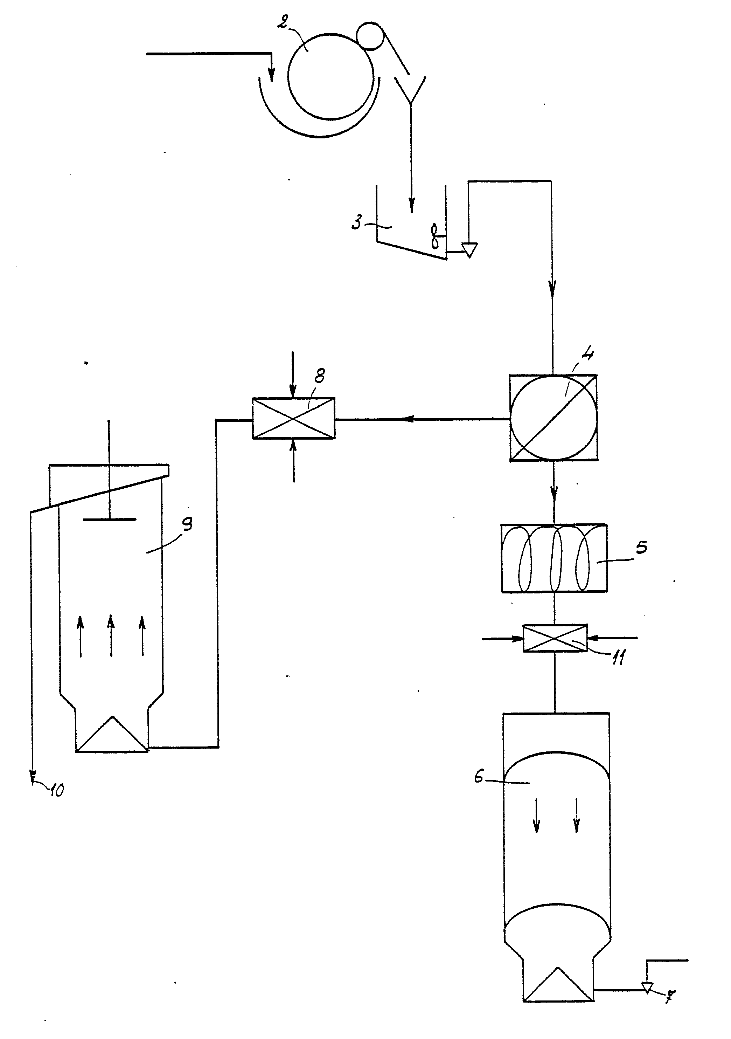

La présente invention sera mieux comprise d'ailleurs, et ses avantages ressortiront bien de l'exemple qui suit d'un mode de réalisation du procédé selon l'invention en référence au dessin schématique annexé dont la figure unique représente le diagramme de l'installation servant à la mise en œuvre de ce procédé.

Exemple.

Les pourcentages sont exprimés en poids.

On met en suspension dans un pulper non (représenté) deux tonnes d'illustrés/magazines dans 25 m$^3$ d'eau, puis on chauffe l'ensemble pendant 25 minutes en présence d'un mélange oxydant constitué par :

1,5 % Na$_2$O$_2$
3 % Silicate
0,8 % acide gras additionné de séquestrant le pH est d'environ 10.

La pâte présente une blancheur d'environ 51,5 G.E.

On procède ensuite à une étape classique de désencrage dans une batterie de cellules de flottation (non représentée), suivie d'une épuration de la pâte ainsi obtenue pour en éliminer tous les contaminants gênants (bandes collantes, débris métalliques, plastiques, etc...)

On constate une perte de 10 à 15 % en poids et l'on obtient une pâte de blancheur 67 G.E.

A ce stade de l'opération, on peut effectuer une opération d'épaississage de la pâte sur filtre rotatif (2), à une concentration située entre 3 et 6 %.

La concentration est ensuite ajustée en (3) aux environs de 4 % par addition d'eau, agitation, homogénéisation, addition de produits antimousse.

On fait ensuite passer la pâte homogénéisée (blancheur 67) dans un appareil centrifugeur (4) muni de perforations dont le diamètre est compris entre 1 et 2 mm, cet appareil tournant aux environs de 500 t/min. Ceci entraîne une séparation sélective des inhibiteurs (produits et adjuvants de couchage) et l'on divise ainsi la pâte en deux fractions :

— l'une correspondant à 52 % en poids de la totalité de la matière première introduite et contenant une majorité de fibres longues, a une blancheur de 69 G.E. ;

— l'autre correspondant à 48 % en poids de la totalité de la matière première introduite et contenant une majorité de fibres courtes et des charges, a une blancheur de 64 G.E.

La fraction contenant en majorité des fibres longues est ensuite épaissie à environ 14 % par passage sur vis munies de filtres (5), puis elle est introduite dans une tour descendante (6) en même temps qu'un milieu de blanchiment oxydant introduit en (11) et essentiellement composé de :

1,5 % Na$_2$O$_2$
2 % Silicate
0,5 % de complexant type DTPA

Le traitement est effectué pendant 3 heures à 40 °C, puis l'on récupère en (7) une pâte de blancheur 76,5 G.E.

La fraction contenant en majorité des fibres courtes et des charges est introduite, après légère acidification en (8) à l'aide d'acide sulfurique pour amener le pH entre 6 et 7, dans une tour montante (9) en même temps qu'une solution à 2 % de bisulfite de sodium en présence d'un séquestrant.

Le traitement est effectué pendant 1 heure 30 à 40 °C, puis l'on récupère en (10) une pâte de blancheur 66 G.E.

On peut utiliser séparément chacune des fractions recueillies. La pâte sortant de la tour descendante permet d'obtenir un papier pouvant atteindre une blancheur de l'ordre de 80 G.E., et présentant de bonnes caractéristiques physiques et mécaniques. Il est, dans ce cas, nécessaire de bloquer la réaction d'oxydation de la pâte contenant en majorité des fibres longues ; on injecte alors à la base de la tour une solution de bisulfite.

La réaction de réduction de la fraction contenant en majeure partie des fibres courtes et des charges est rapidement bloquée par simple action de l'air.

On peut également mélanger les deux fractions afin d'obtenir un mélange uniforme de composition analogue à celles de la pâte de départ et l'on obtient alors une pâte de blancheur 72 G.E., donc très satisfaisante pour l'obtention de papiers de qualité.

L'invention concerne donc également les papiers fabriqués à partir de pâtes obtenues par mise en œuvre du procédé selon l'invention.

## Revendications

1. Procédé de blanchiment sélectif de pâte à papier consistant à soumettre une pâte obtenue par mise en suspension de matières fibreuses et notamment de vieux papiers à une séparation mécanique en deux ou plusieurs fractions se différenciant par la longueur des fibres qui les composent, puis à soumettre chacune des fractions recueillies à un type de blanchiment spécifique du type de fibres de ladite fraction, caractérisé par les étapes suivantes :

    a) on soumet une matière première constituée par des illustrés pour magazines et publications périodiques à un traitement de suspension, désencrage et élimination des contaminants gênants (bandes collantes, débris métalliques, plastiques, etc...) ;

    b) la pâte obtenue par l'étape (a) est séparée par centrifugation en une première fraction correspondant à 30 à 70 % en poids de la totalité de la matière première introduite et constituée d'une majorité de fibres longues, la longueur des fibres de cette fraction se situant entre 1,5 et 4,5 mm ; et en une seconde fraction correspondant à 70 à 30 % en poids de la totalité de la matière première introduite et constituée d'une majorité de fibres courtes, la longueur des fibres de cette fraction se situant entre 0,3 et 2,5 mm ;

    c) ladite première fraction est soumise à un blanchiment effectué en tour descendante (6) en milieu oxydant en présence d'un composé oxygéné ;

    d) la seconde fraction est d'abord acidifiée pour amener son pH entre 6 et 7, et est ensuite soumise à un blanchiment effectué en tour ascendante en milieu réducteur en présence d'hydrosulfite de sodium.

2. Procédé selon la revendication 1, caractérisé en ce que la première fraction correspond à 40 et 60 % en poids de la totalité de la matière première introduite.

3. Procédé selon la revendication 1, caractérisé en ce que la seconde fraction correspond à 60 et 40 % en poids de la totalité de la matière première introduite.

4. Procédé selon l'une quelconque des revendications 1 à 3, caractérisé en ce que l'opération de blanchiment en présence d'un composé oxygéné est précédée d'un épaississage.

5. Procédé selon l'une quelconque des revendications 1 à 4, caractérisé en ce que la totalité de la pâte récupérée après désencrage est soumise à un blanchiment oxydant avant séparation mécanique.

6. Procédé selon l'une quelconque des revendications 1 à 5, caractérisé en ce que chaque fraction est récupérée séparément après avoir subi le processus de blanchiment qui lui est spécifique, et utilisée pour la fabrication du papier.

7. Procédé selon l'une quelconque des revendications 1 à 5, caractérisé en ce que les différentes fractions ayant subi les processus de blanchiment qui leur sont spécifiques sont rassemblées et utilisées pour la fabrication du papier.

## Claims

1. A process for selective bleaching of paper pulp, consisting of submitting a pulp, obtained by making a suspension of fibrous materials and especially of old paper, to mechanical separation into two or more fractions differing in the length of fibres of which they are composed, then submitting each of the fractions produced to a type of bleaching specific to the type of fibres of the said fraction, characterised by the following stages :

    a) a raw material consisting of illustrated magazines and periodicals is submitted to a suspension treatment, ink-removal and elimination of objectionable contamination (adhesive tapes, metallic fragments, plastics material, etc...) ;

    b) the pulp obtained from stage a) is centrifugally separated into a first fraction corresponding to 30 to 70 % by weight of the total of the raw material introduced and consisting of a majority of long fibres, the fibre length of this first fraction being between 1,5 and 4,5 mm, and into a second fraction corresponding to 70 to 30 % by weight of the total of the raw material introduced and consisting of a majority of short fibres, the fibre length of this second fraction being between 0.3 and 2.5 mm ;

    c) the said first fraction is submited to bleaching in a descending tower (6) in an oxidizing environment in the presence of an oxygenated compound ;

d) the second fraction is first acidified to raise its pH to between 6 and 7 and is then submitted to bleaching in an ascending tower in a reducing medium in the presence of sodium hydrosulphite.

2. A process according to Claim 1, characterized in that the first fraction corresponds to between 40 and 60 % by weight of the total of the raw material introduced.

3. A process according to Claim 1, characterized in that the second fraction corresponds to between 60 and 40 % by weight of the total of the raw material introduced.

4. A process according to any of Claims 1 to 3 characterized in that the bleaching operation in the presence of an oxygenated compound is preceded by thickening.

5. A process according to any of Claims 1 to 4, characterized in that all the pulp recovered after ink removal is subjected to oxidizing bleaching before mechanical separation.

6. A process according to any of Claims 1 to 5, characterized in that each fraction is recovered serparately after having undergone the bleaching process specific to it, and is used for the manufacture of paper.

7. A process according to any of Claims 1 to 5, characterized in that the different fractions, after having undergone the bleaching processes specific to them, are mixed together and used for the manufacture of paper.

**Patentansprüche**

1. Verfahren zum selektiven Bleichen von Papierpulpe, bei dem man eine durch Suspendierung von Fasergut und insbesondere Altpapier erhaltene Pulpe einer mechanischen Trennung in zwei oder mehrere Fraktionen unterwirft, die sich durch die Länge der in ihnen enthaltenen Fasern unterscheiden, dann jede der gesammelten Fraktionen einer Bleichungsart unterzieht, die spezifisch ist für die Art der Fasern der betreffenden Fraktion, gekennzeichnet durch die folgenden Verfahrensschritte :

a) man unterwirft ein erstes Gut aus illustrierten Magazinen und Periodika einer Suspensionsbehandlung, De-inken und Elimination von unerwünschten Verunreinigungen (Klebebänder, Teilchen von Metall, Kunststoff usw. ...) ;

b) die nach Verfahrensschritt a) erhaltene Pulpe wird durch Zentrifugieren in eine erste Fraktion aufgetrennt, die 30 bis 70 Gew.% des gesamten eingeführten ersten Gutes entspricht und aus der Hauptmenge der langen Fasern besteht, wobei die Länge der Fasern dieser Fraktion zwischen 1,5 und 4,5 mm liegt ; und in eine zweite Fraktion, die 70 bis 30 Gew.% des gesamten eingeführten ersten Gutes entspricht und aus der Hauptmenge der kurzen Fasern besteht, wobei die Länge der Fasern dieser Fraktion zwischen 0,3 und 2,5 mm liegt ;

c) die erste Fraktion wird einer im absteigenden Turm (6) durchgeführten Bleichung im oxidierenden Milieu in Gegenwart einer Sauerstoffverbindung unterworfen ;

d) die zweite Fraktion wird zuerst angesäuert, um ihren pH-Wert auf zwischen 6 und 7 einzustellen, und wird dann einer im aufsteigenden Turm durchgeführten Bleichung im reduzierenden Milieu in Gegenwart von Natriumhydrogensulfit unterworfen.

2. Verfahren nach Anspruch 1, dadurch gekennzeichnet, daß die erste Fraktion 40 bis 60 Gew.% des gesamten eingeführten ersten Gutes entspricht.

3. Verfahren nach Anspruch 1, dadurch gekennzeichnet, daß die zweite Fraktion 60 bis 40 Gew.% des gesamten eingeführten ersten Gutes entspricht.

4. Verfahren nach einem der Ansprüche 1 bis 3, dadurch gekennzeichnet, daß der Bleichstufe in Gegenwart von Sauerstoff eine Eindickung vorgeschaltet ist.

5. Verfahren nach einem der Ansprüche 1 bis 4, dadurch gekennzeichnet, daß die Gesamtheit der nach dem De-inken gewonnenen Pulpe vor der mechanischen Trennung einer oxidierenden Bleichung unterworfen wird.

6. Verfahren nach einem der Ansprüche 1 bis 5, dadurch gekennzeichnet, daß jede Fraktion getrennt gewonnen wird, nachdem sie dem für sie spezifischen Bleichverfahren unterworfen wurde, und für die Papierherstellung verwendet wird.

7. Verfahren nach einem der Ansprüche 1 bis 5, dadurch gekennzeichnet, daß die verschiedenen Fraktionen, nach dem sie dem für die spezifischen Bleichverfahren unterworfen wurden, gesammelt und zur Papierherstellung verwendet werden.